(19) Europäisches Patentamt
European Patent Office
Office européen des brevets

(11) EP 0 940 267 B1

(12) **EUROPEAN PATENT SPECIFICATION**

(45) Date of publication and mention of the grant of the patent:
**29.10.2003 Bulletin 2003/44**

(51) Int Cl.[7]: **B41M 5/38**, G02F 1/1339

(21) Application number: **99103879.5**

(22) Date of filing: **01.03.1999**

(54) **Thermal transfer material containing epoxyacrylate**

Thermisches Übertragungsmaterial, das Epoxyacrylat enthält

Matériau pour transfert thermique contenant de l' époxyacrylate

(84) Designated Contracting States:
**DE FR GB**

(30) Priority: **02.03.1998 JP 4985998**

(43) Date of publication of application:
**08.09.1999 Bulletin 1999/36**

(73) Proprietor: **FUJICOPIAN CO., LTD.**
**Osaka-shi, Osaka-fu (JP)**

(72) Inventor: **Yoshida, Katsuhiro**
**c/o Fujicopian Co., Ltd.**
**Osaka-shi, Osaka-fu (JP)**

(74) Representative:
**Leson, Thomas Johannes Alois, Dipl.-Ing. et al**
**TBK-Patent,**
**P.O. Box 20 19 18**
**80019 München (DE)**

(56) References cited:
**EP-A- 0 798 128**
**EP-A- 0 806 302**
**EP-A- 0 812 704**
**EP-A- 0 864 439**
**WO-A-97/20696**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 940 267 B1

## Description

The present invention relates to a thermal transfer material usable for forming images having excellent fastness such as heat resistance, solvent resistance and scratch resistance and a thermal transfer material favorably usable forming a dot spacer.

Conventional common thermal transfer materials include one wherein a heat-sensitive transferable ink containing a vehicle composed of a wax as a main component is applied on a foundation, and another wherein a heat-sensitive transferable ink containing a vehicle composed of a resin as a main component is applied on a foundation for forming printed images of high quality even on a paper sheet having poor surface smoothness or forming printed images having good fastness.

Recently, bar code printers or label printers using a thermal transfer material have been used to print bar codes or the like which are used for management of parts or products in production process of manufacturing factories, merchandise management in distribution field, management of articles in use field, and the like.

Among such articles to be given bar codes, there are those exposed to high temperatures after provision of bar codes. For example, a heat treatment at 180°C is conducted in production process for printed wiring boards and a heat treatment at 250°C in inspection process for semiconductors. Therefore, the images for such uses are required to have high-level heat resistance. Bar codes or the like used for product management in manufacturing factories or the like require good solvent resistance because they frequently come into contact with solvents, oils and the like, and bar codes or the like used in distribution field or the like require good scratch resistance because they are frequently subjected to rubbing.

Further, besides the printing of bar codes, thermal transfer printers have been used for printing diversified products in small quantities, including outdoor advertising, election posters, general posters, standing signboards, stickers, catalogs, pamphlets, calendar, and the like in commercial printing field; bags for light packaging, labels of containers for foods, drinks, medicines, paints, and the like, and binding tapes in packaging field; labels for indicating quality characteristics, labels for process control, labels for product management, and the like in apparel field. These articles also require scratch resistance.

However, there are no conventional thermal transfer materials which exhibit excellent transferability and can form printed images meeting high-level heat resistance, solvent resistance and scratch resistance at the same time.

On the other hand, conventional methods for forming a spacer which is interposed between two substrates constituting a liquid crystal display panel to support both the substrates include a method of scattering glass beads as a common method. However, the method involves the problem wherein it is difficult to uniformly scatter glass beads, resulting an unevenness in distribution of the glass beads. Recently, there is proposed a method wherein a photopolymerizable resin layer is formed on a temporary support and the layer is processed by photolithography to give a transfer sheet having dots of the resin, and then the dots on the transfer sheet are transferred onto a substrate for liquid crystal display panel, the dots transferred on the substrate serving as a spacer (JP-A-7-152038).

Methods for forming a dot spacer for a touch panel and the like include a method using screen printing as a common method (e.g. JP-A-8-101740).

However, since the aforesaid conventional methods for forming dot spacers utilize photolithography or printing method, they require large scale of systems and troublesome operations.

EP-A-0 798 128 discloses a thermal transfer medium with phase isolated reactive components. The reactive components comprise an epoxy resin binder and a cross-linker for the epoxy resin binder which are maintained in separate phases within the thermal transfer layer. Such a construction provides improved scratch and smear resistance of the obtained images.

EP-A-0 806 302 discloses a thermal transfer medium which employs reactive components that cross-link when heated during image transfer to provide images with high scratch and smear resistance. The reactive components comprise an encapsulated liquid epoxy resin and a cross-linker which remain separate while incorporated within a thermal transfer layer.

EP-A-0 812 704 discloses a coating formulation and thermal transfer ribbons which do not require the application of a separate back-coating for the substrate. A back-coating is self-generated on the untreated side of the substrate from the thermal transfer layer of the ribbon when the two make contact. The coating formulation may comprise an epoxy binder resin and a cross-linker.

WO-A-97/20696 discloses a transfer printing medium including a carrier to which a curable laser-transferable ink having one or more layers is applied. The ink includes at least one colorant, at least one polymerization initiator and at least one curable pre-polymer, e.g. epoxy-functionalized pre-polymers. Such a medium is suitable in laser-induced transfer printing.

EP-A-0 864 439, a document according to Art. 54(3) EPC discloses a thermal transfer material comprising a foundation and a heat-sensitive transferable layer provided on the foundation, the heat-sensitive transferable layer comprising an acrylic copolymer containing at least recurring units derived from glycidyl(meth)acrylate and/or an epoxy

resin containing two or more epoxy groups in one molecule and a curing agent containing a carboxyl group. Such a thermal transfer material exhibits satisfying solvent resistance, heat resistance and transparency required for dot spacer without hindering the transferability.

In view of the foregoing, an object of the present invention is to provide a thermal transfer material which exhibits satisfactory transferability and is capable of forming printed images having high-level heat resistance, solvent resistance and scratch resistance.

Another object of the present invention is to provide a thermal transfer material useful for simply forming a dot spacer.

These and other objects of the present invention will become apparent from the description hereinafter.

The present invention provides a thermal transfer material comprising a foundation and a heat-sensitive transferable layer provided on the foundation, the heat-sensitive transferable layer comprising an epoxyacrylate having a glass transition point or melting point of 50° to 120°C and a photopolymerization initiator as essential ingredients.

According to an embodiment of the present invention, the epoxyacrylate is a (meth)acrylate compound derived from a cresol novolak type epoxy resin.

The heat-sensitive transferable layer of a thermal transfer material in accordance with the present invention comprises an epoxyacrylate having a glass transition point or melting point of 50° to 120°C and a photopolymerization initiator as essential ingredients, and as required, a coloring agent.

In the present invention, it has been discovered that a heat-sensitive transferable layer containing an epoxyacrylate having a glass transition point or melting point of 50° to 120°C as a vehicle exhibits excellent transferability and the printed image obtained by selectively heat-transferring the heat-sensitive transferable layer onto a receptor is cured by ultraviolet irradiation to become an image having high-level heat resistance, scratch resistance and solvent resistance.

Further it has been discovered that when the aforesaid thermal transfer material is used and thermal transfer technology wherein the transfer is performed in a dot basis by means of a printer equipped with a thermal head is preferably utilized, a dot spacer can be simply formed and the thus obtained dot spacer exhibits high performance.

Generally most of ultraviolet-curable resins are in liquid state or in semi-solid state. When these ultaviolet-curable resins are used as a vehicle for a heat-sensitive transferable layer, the resulting heat-sensitive transferable layer shows tackiness at ordinary temperatures. Thus, the ultraviolet-curable resins cannot be used for thermal transfer materials. In contrast thereto, the epoxyacrylate used in the present invention is solid at ordinary temperatures. When the epoxyacrylate is used as a vehicle for a heat-sensitive transferable layer, the resulting heat-sensitive transferable layer does not show tackiness and invites no disadvantage.

The epoxyacrylate used as a vehicle for the heat-sensitive transferable layer in the present invention is a (meth)acrylate compound derived from an epoxy resin, more specifically a prepolymer or oligomer which contains a chemical structure formed by ring opening and esterification of the epoxy group of an epoxy resin with (meth)acrylic acid or its derivative and has one or more, preferably two or more (meth)acryloyl groups as functional group. Herein, the epoxyacrylate may be referred to as "(meth)acrylate of epoxy resin".

(Meth)acrylates of cresol novolak type epoxy resin are preferred because they are excellent in performance as a vehicle for heat-sensitive transferable ink, for instance, transferability (refer to the property that only heated portions of an ink layer can be separated from unheated portions thereof and selectively transferred). Examples of the (meth) acrylates of cresol novolak type epoxy resin include (meth)acrylates of cresol novolak polyglycidyl ether represented by the following formula wherein R is hydrogen atom or methyl group, and n is an integer of 1 to 7.

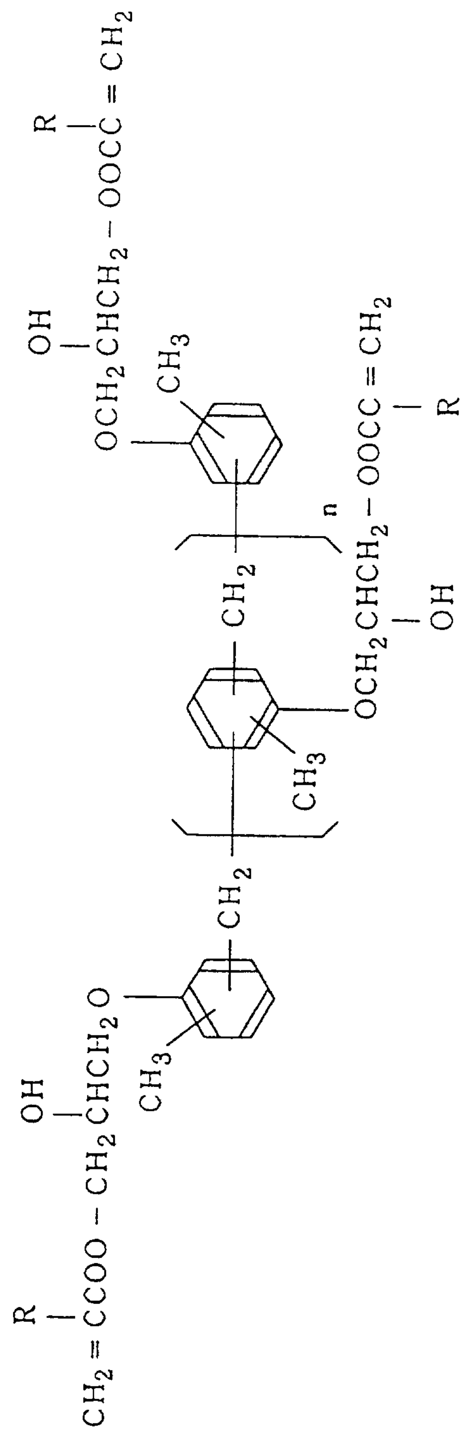

(Meth)acrylates of bisphenol A type epoxy resins or the like can also be used as the epoxyacrylate.

The epoxyacrylate used in the present invention has a glass transition point or melting point of 50° to 120°C from the viewpoint of shelf life and transfer sensitivity.

As the photopolymerization initiator useful in the present invention, those commonly used as the photopolymerization initiator for ultraviolet-curable resins can be used without any particular limitation. Examples of the photopolymerizatin initiators are acetophenone type, benzophenone type, benzil type, benzoin type, thiuram type and azo compound type. Typical examples are Irgacure 651®, Irgacure 184®, Irgacure 261® and Irgacure 500® (all made by

Ciba-Geigy AG.) As required, a photosensitizer may be used in combination with the initiator.

The amount of the photopolymerization initiator is preferably in the range of 0.3 to 10 parts by weight, more preferably 1 to 5 parts by weight, relative to 100 parts by weight of the epoxyacrylate. When the amount of the photopolymerization initiator is smaller than the above range, the epoxyacrylate is prone to be not sufficiently cured when irradiated with ultraviolet ray. When the amount of the photopolymerization initiator is larger than the above range, a portion of the initiator is prone to remain unchanged, resulting in an adverse effect on the fastness of the cured product.

The vehicle of the heat-sensitive transferable layer in accordance with the present invention may be incorporated with a thermoplastic resin other than the epoxyacrylate and/ or a wax so long as the objects of the present invention are not injured.

In the case of the thermal transfer material for forming printed images such as characters and pictures, the heat-sensitive transferable layer is incorporated with a coloring agent. As such coloring agents, carbon black as well as other various organic and inorganic pigments and dyes can be used. Examples of the organic and inorganic pigments are azo pigments (such as insoluble azo pigments, azo lake pigments and condensed azo pigments), phthalocyanine pigments, nitro pigments, nitroso pigments, anthraquinoid pigments, nigrosine pigments, quinacridone pigments, perylene pigments, isoindolinone pigments, dioxazine pigments, titanium white, calcium carbonate and barium sulfate. The content of the coloring agent in the heat-sensitive transferable layer is preferably in the range of 5 to 60 % by weight.

Yellow, magenta and cyan coloring agents, and optionally black coloring agent are used for forming multicolor or full-color printed images utilizing subtractive color mixture. The coloring agents for yellow, magenta and cyan are preferably transparent pigments, while the coloring agents for black may be opaque ones. Herein, the term "transparent pigment" refers to a pigment which gives a transparent ink when dispersed in a transparent vehicle.

In the case of the thermal transfer material for forming the dot spacer, the heat-sensitive transferable layer usually does not contain a coloring agent.

The heat-sensitive transferable ink layer in accordance with the present invention may be incorporated with an additive such as dispersing agent in addition to the above-mentioned ingredients.

The thermal transfer material of the present invention can be obtained by applying and drying a coating liquid for heat-sensitive transferable layer onto a foundation to give a heat-sensitive transferable layer. The coating liquid can be prepared by dissolving the aforesaid epoxyacrylate and photopolymerization initiator into a suitable solvent and as required, dispersing or dissolving a coloring agent and other additives thereinto. The coating amount (on a solid basis, hereinafter the same) of the heat-sensitive transferable layer is usually in the range of 0.02 to 5 g/m$^2$, preferably 0.5 to 3 g/m$^2$.

Usable as the foundation in the present invention are polyethylene terephthalate film, polyethylene naphthalate film, polycarbonate film, polyamide film, condenser paper, and the like. The thickness of the foundation is usually from 1 μm to 10 μm. From the standpoint of reducing heat spreading to increase the resolution of the printed image, the thickness of the foundation is preferably from 1 to 6 μm. Where the thermal transfer material of the present invention is to be used on a thermal transfer printer equipped with a thermal head, a conventional sticking preventive layer is preferably formed on the back side (the side to be brought into slide contact with the thermal head) of the foundation. Examples of materials for the sticking preventive layer include various heat-resistant resins such as silicone resins, fluorine-containing resins and nitrocellulose resins, and other resins modified with these heat-resistant resins such as silicone-modified urethane resins and silicone-modified acrylic resins, and mixtures of the foregoing heat-resistant resins and lubricating agents.

In the thermal transfer material of the present invention, a release layer composed of a wax as a main component may be interposed between the foundation and the heat-sensitive transferable layer. Also a surface layer may be provided on the heat-sensitive transferable layer for the purpose of improving adhesion and the like.

The formation of an image or dot spacer using the thermal transfer material of the present invention can be performed by superimposing the heat-sensitive transferable layer of the thermal transfer material on a receptor and applying heat energy to the heat-sensitive transferable layer imagewise or in dot pattern. A thermal head is generally used as a heat source for the heat energy. However, any conventional heat sources such as laser beam, infrared flash and heat pen can be used.

When the receptor is not a sheet-like one but a three-dimensional one, or one having a curved surface, thermal transfer using laser beam is advantageous from the viewpoint of easy application of heat energy.

In forming an image or a dot spacer using the thermal transfer material of the present invention, the image or dot spacer may be directly formed on a final object such as a label or a substrate for liquid crystal display panel, or alternatively by previously forming the image or dot spacer on a flexible sheet-like receptor and then bonding the receptor bearing the image or dot spacer to the final object with a suitable means such as a heat-resistant adhesive.

The image or dot spacer obtained on the final object using the thermal transfer material of the present invention can be outstandingly improved in fastness such as heat resistance, solvent resistance and scratch resistance by subjecting to a curing treatment with ultraviolet irradiation. The curing treatment with ultraviolet irradiation can be performed by using a commercially available ordinary ultraviolet irradiation apparatus. In use where high-level fastness is not

required, the final object bearing the image can be used without the curing treatment with ultraviolet irradiation.

The present invention will be described in detail by way of Examples and Comparative Example. It is to be understood that the present invention will not be limited to these Examples, and various changes and modifications may be made in the invention without departing from the scope thereof.

EXAMPLES 1 to 3 and COMPARATIVE EXAMPLE 1

On one side of a 5 μm-thick polyethylene terephthalate film was formed a sticking preventive layer composed of a silicone resin with a coating amount of 0.25 $g/m^2$. Onto the opposite side of the polyethylene terephthalate film with respect to the sticking preventive layer was applied a coating liquid of the formulation shown in Table 1 and dried to form a heat-sensitive transferable layer with a coating amount of 2 $g/m^2$, yielding a thermal transfer material.

Each of the obtained thermal transfer materials was evaluated for transferability, scratch resistance, solvent resistance and heat resistance by the following methods. The results are shown in Table 2.

[Transferability]

Each of the thermal transfer materials was used to transfer a bar code pattern onto a receptor by means of a thermal transfer type bar code printer (M-8450 made by Sato Corp.) under the following conditions.

<Printing condition>

| | |
|---|---|
| Applied energy: | 4 (darkness, the value prescribed in the printer) |
| Printing speed: | 4 0.1m/s |
| Receptor: | YOT-85® made by Oji Yuka Synthetic Paper Co., Ltd. (a polypropylene film having an image-receiving layer composed of a polyester resin) |

Using a bar code reader(Codascan II® made by RJS ENTERPRISES, INC.), the printed image was subjected to a reading test. The evaluation criterion in reading with the bar code reader is as follows:

A: Perfectly readable
B: Almost perfectly readable
C: Partially readable
D: Impossible to read

[Scratch resistance]

Printed images were formed on the receptor under the same conditions as in the above "transferability" test and the obtained printed images were cured by irradiation with ultraviolet ray under the following conditions:

| | |
|---|---|
| Ultraviolet irradiation apparatus: | CS-30 model made Japan Storage Battery Co., Ltd. |
| Lamp: | Mercury lamp(output power: 3kW) |
| Distance: | 12 cm (distance between the printed matter and the lamp) |
| Travelling speed of printed matter: | 10 m/minute Irradiation time: 1.2 second |

The cured images were subjected to a rubbing test under the following conditions and after the rubbing test, the images were subjected to the same reading test using the same bar code reader as in the above "transferability" test.

| | |
|---|---|
| Tester: | A.A.T.C.C. crock meter, Model CM-1 made by ATLAS ELECTRIC DEVICE COMPANY |
| Rubbing material: | Cotton cloth |
| Pressure: | 500 $g/cm^2$ |
| Number of reciprocation: | 300 |

[Solvent resistance]

The images cured under the same conditons as in the above "scratch resistance" test were subjected to a rubbing test under the following conditions and after the rubbing test, the images were subjected to the same reading

test using the same bar code reader as in the above "transferability" test.

| | |
|---|---|
| Tester: | A.A.T.C.C. crock meter, Model CM-1 made by ATLAS ELECTRIC DEVICE COMPANY |
| Rubbing material: | Cotton cloth impregnated with ethanol or gasoline |
| Pressure: | 500 g/cm$^2$ |
| Number of reciprocation: | 300 |

[Heat resistance]

10 mg of the ink which was obtained from the printed images cured under the same conditions as in the above "scratch resistance" test was weighed out with an electronic scales. After being subjected to a heat treatment under the condition: 250°C × one hour in an oven, the weight of the ink was again measured. The ink residuary ratio (% by weight) defined by the following formula was determined to evaluate the heat resistance.

$$\text{Ink residuary ratio (\% by weight)} = \frac{\text{Weight after heat treatment}}{\text{Weight before heat treatment}} \times 100$$

TABLE 1

| Formula (% by weight) | Ex.1 | Ex.2 | Ex.3 | Com.Ex.1 |
|---|---|---|---|---|
| Epoxyacrylate A *1 | 20 | | | |
| Epoxyacrylate B *2 | | 20 | | |
| Epoxyacrylate C *3 | | | 13 | |
| Fancryl FA731A® *4 | | | 7 | |
| Irgacure 184® *5 | 1 | 1 | 1 | |
| Vylon 200® *6 | | | | 17 |
| Carbon black | 4 | 4 | 4 | 3 |
| Methyl ethyl ketone | 75 | 75 | 75 | 16 |
| Toluene | | | | 64 |

*1: Acrylate of o-cresol novolak type epoxy resin, glass transition point: 50°C

*2: Methacrylate of o-cresol novolak type epoxy resin, glass transition point: 60°C

*3: Ripoxy RV-60®, acrylate of bisphenol A type epoxy resin made by Showa Highpolymer Co., Ltd., melting point: 80°C

*4: Acrylate of tris(2-hydroxyethyl) isocyanulate made by Hitachi Chemical Co., Ltd. (monomer added to accelerate the curing of epoxyacrylate C), melting point: 54°C

*5: 1-Hydroxycyclohexyl phenyl ketone made by Ciba-Geigy AG.

*6: Polyester resin made by Toyobo Co., Ltd., glass transition point: 69°C

TABLE 2

| | Transferability | Scratch resistance | Solvent | resistance | Residuary ratio (% by weight) |
|---|---|---|---|---|---|
| | | | Ethanol | Gasoline | |
| Ex.1 | A | A | A | A | 98 |
| Ex.2 | A | A | A | A | 98 |
| Ex.3 | A | B | B | B | 98 |
| Com.Ex.1 | A | D | D | D | 85 |

The use of the thermal transfer material of the present invention provides clear printed images with good transferability, which are cured by ultraviolet irradiation to become images with high-level heat resistance, solvent resistance and scratch resistance. The dot-like transferred product formed by using the thermal transfer material of the present invention and cured by ultraviolet irradiation serves as a dot spacer of high performance for liquid crystal display panels, touch panels, and the like.

In addition to the materials and ingredients used in the Examples, other materials and ingredients can be used in the Examples as set forth in the specification to obtain substantially the same results.

A thermal transfer material comprising a foundation and a heat-sensitive transferable layer provided on the foundation, the heat-sensitive transferable layer comprising an epoxyacrylate having a glass transition point or melting point of 50 ° to 120 °C and a photopolymerization initiator as essential ingredients. The printed images obtained from the thermal transfer material can be cured by ultraviolet irradiation to give images having excellent heat resistance, solvent resistance and scratch resistance. The cured dot-like pattern can serve as a dot spacer of high performance.

## Claims

1. A thermal transfer material comprising a foundation and a heat-sensitive transferable layer provided on the foundation, the heat-sensitive transferable layer comprising a photopolymerization initiator
   **characterized in that**
   said heat-sensitive transferable layer comprises an epoxyacrylate containing a chemical structure formed by ring-opening and esterfication of an epoxy group of an epoxy resin with (meth)acrylic acid or its derivative, the epoxyacrylate having a glass transition point or melting point of 50°C to 120°C.

2. The thermal transfer material of claim 1, wherein said photopolymerization initiator is contained in said heat-sensitive transferable layer in an amount of 0.3 to 10 parts by weight relative to 100 parts by weight of said epoxyacrylate.

3. The thermal transfer material of claim 1 or 2, wherein the epoxyacrylate is a (meth)acrylate compound derived from a cresol novolak type epoxy resin.

## Patentansprüche

1. Material für thermische Übertragung, das eine Grundlage und eine auf der Grundlage bereitgestellte wärmeempfindliche übertragbare Schicht umfasst, wobei die wärmeempfindliche übertragbare Schicht einen Fotopolymerisationsstarter umfasst,
   **dadurch gekennzeichnet, dass**
   die wärmeempfindliche übertragbare Schicht ein Epoxyacrylat umfasst, das eine durch Ringöffnung und Veresterung einer Epoxidgruppe eines Epoxidharzes mit (Meth)acrylsäure oder ihrem Derivat gebildete chemische Struktur enthält, wobei das Epoxyacrylat einen Glasübergangspunkt oder Schmelzpunkt von 50°C bis 120°C aufweist.

2. Material für thermische Übertragung nach Anspruch 1, wobei der Fotopolymerisationsstarter in der wärmeempfindlichen übertragbaren Schicht relativ zu 100 Gewichtsteilen des Epoxyacrylats in einer Menge von 0,3 bis 10 Gewichtsteilen enthalten ist.

3. Material für thermische Übertragung nach Anspruch 1 oder 2, wobei das Epoxyacrylat eine (Meth)acrylatverbindung ist, die sich von einem Epoxidharz vom Cresol-Novolak-Typ ableitet.

## Revendications

1. Matériau de transfert thermique comprenant une base et une couche transférable sensible à la chaleur pourvue sur la base, la couche transférable sensible à la chaleur comprenant un initiateur de photopolymérisation,
   **caractérisé en ce que**
   ladite couche transférable comprend un époxyacrylate contenant une structure chimique formée par ouverture de cycle et estérification d'un groupe époxy d'une résine époxy, avec de l'acide (méth)acrylique ou son dérivé, l'époxyacrylate ayant une température de transition vitreuse ou point de fusion de 50°C à 120°C.

2. Matériau de transfert thermique selon la revendication 1, dans lequel ledit initiateur de photopolymérisation est contenu dans ladite couche transférable sensible à la chaleur dans une quantité de 0,3 à 10 parties en poids par rapport à 100 parties en poids dudit époxyacrylate.

3. Matériau de transfert thermique selon la revendication 1 ou 2, dans lequel l'époxyacrylate est un composé (méth) acrylate dérivé d'une résine époxy de type novolak de crésol.